# EUROPEAN PATENT SPECIFICATION

(11) **EP 2 902 573 B1**
(45) Date of publication and mention of the grant of the patent: **11.07.2018**
(21) Application number: 15153064.9
(22) Date of filing: 29.01.2015
(51) Int. Cl.: E05B 73/00, E05B 67/36, E05B 67/38

(54) **Locking device with security clamp and such a security clamp**
Verriegelungsvorrichtung mit Klemme und eine solche Klemme
Dispositif de verrouillage avec pince de sécurité et cette pince de sécurité

(30) Priority: 04.02.2014 SE 1450117
(43) Date of publication of application: 05.08.2015
(73) Proprietor: CombiLock AB, 335 23 Gnosjö (SE)
(72) Inventor: Manning, Claes, 434 31 Kungsbacka (SE)
(74) Representative: Groth & Co. KB

(56) References cited:
- WO-A1-2006/132617
- FR-A1- 2 962 148
- US-A- 4 658 607
- US-A- 5 214 945

## Description

### Technical Field

The present invention refers to the locking arrangement for securing of a first part to another part, preferably a lock of a motor boat engine securing a part related to the engine to a part related to a boat, and especially to prevent a damage of a lock pin holding a motor boat engine at the transom stern of the boat.

### Background Art

The background of the invention is that locks in the market for motor boat engines can be broken if it is possible to reach the head of the bolt of a lock pin used to hold the engine support of a motor boat engine at the transom stern of the boat.

Existing locks for motor boat engines are a good protection in that a nut of a lock pin cannot be reached with a tool nor being possible to be overdrawn as a nut covering lock housing freely will rotate when a moment of torsion is applied onto the lock housing.

However still the head of the bolt can be reached with a breaking, sawing or cutting tool, which if the worst comes to the worst separates the head of the bolt from the lock pin and thus makes the motor free from the transom stern of the boat.

Further background art is disclosed by the document FR 2962148 showing a theft-prevention device for securing e.g. attaching bolts of outboard motor to a nautical boat, which device has a cap equipped with lock mechanism with locking element penetrating in cylindrical holes of clevis to ensure immobilization of cap on plate. The device has a locking base plate fixed to a nautical boat or at a pontoon by attaching bolts. The base plate comprises crossing holes threaded on rods of screws of the bolts, where the plate comprises a locking clevis equipped with cylindrical crossing holes. A removable covering cap covers the base plate. The cap is equipped with a lock mechanism equipped with a locking element penetrating in the cylindrical crossing holes of the clevis to ensure immobilization of the cap on the base plate by operation of the lock mechanism.

US 5214945 discloses a locking assembly used to deny access to a nut or to a bolt head to prevent theft of an article that is bolted to a body such as a vehicle. The locking assembly includes a retainer through which the bolt passes and that partially surrounds the nut or bolt head that secures the retainer to the body. The retainer includes a groove that extends circumferentially around it. The locking assembly also includes a housing that fits over the retainer and that is selectively engaged to the retainer by a ball bearing that is pushed into the groove on the retainer when a key turns the shaft of a lock which turns a cam that pushes the ball bearing into the groove.

WO 2006132617 discloses an outboard motor lock assembly having a longitudinally-extending base. The base has a longitudinally-extending slot defined within it and is functionally adapted to overlay the head portions of clamping screws used with the motor supports. The base slides over the lever-like head portions via the slot, one end of the slot being open and the opposite end of the slot being closed. A transversely disposed lock cylinder is slidingly attached to the base at the open end of the slot. The lock cylinder includes a latch that is engageable with a latch keeper that is also situated at the open end of the slot. When the lock cylinder latch is secured to the latch keeper, the lock cylinder blocks the slot opening and the base is unable to slide along the head portions of the clamping screws.

### Purpose of the Invention

The purpose of the invention is to achieve a new design of a lock being safer than the locks of similar shape known per se.

Furthermore the purpose is to achieve such a new lock being simple and thereby safely working and cost effective as well.

The purpose of the present invention is to achieve an arrangement eliminating the possibility to make use of a tool for grasping, breaking or sawing of a lock pin used for securing of a first part to another part, which may be a motor boat engine.

With other words, the purpose is to achieve an arrangement which as far as possible prevents admission to any part of a lock pin securing two parts together.

Furthermore the purpose is to achieve a safety shackle to be connected with a head of the bolt of a lock pin.

### Summary of the Invention

By the present invention, such as it is evident from the independent claim, the purposes given above are complied with whereby the drawbacks mentioned are eliminated. Suitable embodiments of the invention are evident from the dependent claims.

The invention refers to a locking arrangement for a motor boat engine being attached to a first boat belonging part, preferably a transom stern. The locking arrangement includes a lock body with an annular groove surrounding the lock body. Furthermore the lock body is included within a locking housing. Preferably the lock body has a circular cylindrical form, but may also have other shapes as long as the surrounding groove in the lock body is circular cylindrical. Furthermore the locking arrangement includes a lock cylinder controllable by an operating means, e.g. a key, and having a protruding faucet controlled by the operating means, in locked position said locking faucet protrudes into said surrounding groove, whereby the lock cylinder is enclosed in the locking housing. In the embodiment shown the operating means is shown as a key, but also electrical and/or remote controlled operating means may be alternatives to the key. Furthermore the locking arrangement includes a lock pin equipped with a head of a bolt at one end of which, and at the other end it is equipped with an anchor means. The lock pin extends though a second, engine belonging part and through the first, boat belonging part as well and further inside the locking housing and through its lock body, whereby the lock pin is anchored to the lock body by said anchor means, preferably in form of a nut. In accordance with the invention, the locking arrangement includes a safety shackle surrounding the head of the bolt thereby preventing a connection of a tool to the head of the bolt when the locking arrangement is installed. The safety shackle is formed with an open U-formed slit made to be able to receive the lock pin. By this slit the safety shackle can be introduced between the head of the bolt and the second part belonging to the engine when the lock pin has been installed but before it has been secured to the first part belonging to the boat. The U-formed slit has a recess forming a shoulder as a part of a latch head extending above the contact surface of the head of the bolt in the safety shackle. The latch head secures the safety shackle when the lock pin is braced against the first part belonging to the boat.

At one embodiment of the locking arrangement one side of the safety shackle has a protruding bearing edge to bear against a surface of the second, engine related part to prevent a rotation of the safety shackle. Preferably both the surface and the bearing edge have a plane structure, but also curved structures will work. The structure of the surfaces depends more on the form of the surfaces of the second, engine related part at the mounting holes and then the safety shackle is shaped accordingly.

At one embodiment of the locking arrangement the safety shackle has sides surrounding the head of the bolt except for the lock pin receiving side when the safety shackle is installed. The embodiment is shown with plane perpendicular sides, but at further favorable embodiments the sides are curved and/or unsymmetrical to make fixation of gripping tools more difficult.

At one embodiment of the locking arrangement the lock pin receiving side of the safety shackle, when the locking arrangement is installed, cooperates with a surface of the second, engine related part, which surface abuts the safety shackle. In such a case the safety shackle is given a plane pin receiving side to make a simple abutment possible onto a likewise plane side of the second, engine related part. Thereby the safety shackle will completely encompass and hide the head bolt of the lock pin.

At one embodiment of the locking arrangement the lock body has a rotation symmetrical structure. With such a design also the lock body may rotate in the cylindrical opening in the locking housing, though this is not quite necessary for the work of the locking arrangement.

At one embodiment of the locking arrangement a rotatable cylindrical sleeve is arranged around the lock pin in the area of the interface between the first part and the locking housing and/or in the area of the interface between the first part and the second part. The cylindrical sleeve will be either a sleeve or two sleeve parts extending above the said interface areas to minimize the possibility e.g. for a hack saw to be pressed into the gap between the parts to saw off the lock pin. At such an attempt for sawing off the lock pin the sleeve will rotate and the sawing is rendered difficult. Preferably the sleeve is made of hardened steel.

The safety shackle is suitable in particular for a locking arrangement mentioned above, but is also useful for other applications than such a locking arrangement when there is a request for prevention of the head of the bolt. The embodiment is preferably made with curved and/or unsymmetrical surfaces to make fixation of gripping tools around the head of the bolt more difficult.

At one embodiment of the locking arrangement the safety shackle is made to surround all the sides of the head of the bolt except for the lock pin receiving side.

At one embodiment of the locking arrangement the shoulder having a shoulder surface situated above the contact surface of the safety shackle against the head of the bolt when the safety shackle is installed. The shoulder prevents that the safety shackle will be knocked off, broken away from the head of the bolt when the lock pin is installed.

At one embodiment of the locking arrangement one side of the safety shackle is equipped with a protruding bearing edge having a side facing the safety shackle. Preferably this side has an even shape.

### Brief description of the Drawings

Now the invention will be described more in detail with references to the attached drawing figures. The drawing figures are only principal sketches intended to facilitate the understanding of the invention. Furthermore different scales have been used in different figures to illustrate the respective parts.
Fig. 1 shows a section view through an embodiment of the invention as it is installed when in use.
Fig. 2 shows in an enlargement an embodiment of the invention.
Fig. 3 shows an end view of the embodiment according to Fig. 2.
Fig. 4 shows a section view A-A according to Fig. 2.
Fig. 5 shows a locking housing for a locking arrangement according to the invention.
Fig. 6 shows a centre section through the locking housing.

### Description of Embodiments of the Invention

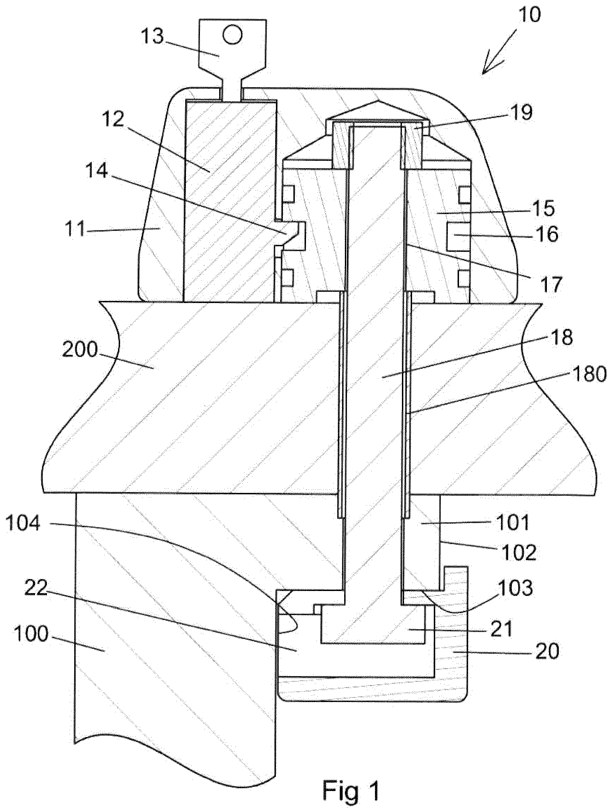

Fig. 1 shows a locking arrangement 10 which consists of a locking housing 11 including a lock cylinder 12, which is operated by an operation means 13 in form of a key. Hereby the lock cylinder may be operated by the key to protrude and withdraw respectively a lock bolt 14 in a direction perpendicular to the length axis of the lock cylinder.

Furthermore the locking arrangement includes a rotation symmetrical lock body 15 having the shape of an annularly surrounding groove 16. Moreover the lock body has two further annular grooves arranged to include tightening O-rings which also act as damping elements. The lock cylinder 12 and the lock body 15 are located and oriented in such a way in the locking housing 11 that the lock bolt 14 in its protruded position extends into the groove 16 according to the figure. The lock cylinder 12 and the lock body 15 are mounted in each an opening in the locking housing according to the figure, whereby the lock bolt 14 is brought to be in engagement with the locking housing 15 through a passage between the two openings. At least the opening to the lock body 15 has a cylindrical shape as the lock body 15 would be able to rotate with respect to the locking housing 11. The locking housing 11 has a larger opening to fit for the lock body 15 and a smaller opening where the lock cylinder 12 is installed. Further the lock body 15 is equipped with a through hole 17, through which a lock pin 18 extends when the locking arrangement is mounted. The lock body 15 is tied, e.g. rotatably, around the lock pin 18 with an anchor means 19, which in the figure is shown as a nut being threaded onto the end of the lock pin. Also anchor means in the shape of through pins at the end of the lock pin are conceivable. Hereby the lock cylinder 12 has a side action lock bolt 14 hitting the wide groove 16 in the lock body. It results in that the locking housing 11 rotates in a free way when locked, the locking housing 11 is now made tight against for instance the transom stern.

The locking arrangement 10 also includes a safety shackle 20 surrounding a head of the bolt 21 on the lock pin 18. By this surrounding of the head of the bolt 21 the safety shackle 20 eliminates approach to the head of the bolt and prevent thereby a connection to or a direct action onto the head of the bolt of a tool.

As is shown by Fig. 1 the approach to the lock pin 18 is eliminated in that the locking housing 11 completely covers one end of the lock pin 18 and in that the safety shackle 20 completely covers the other end of the lock pin 18. Turning the locking arrangement or the lock pin to pieces is eliminated in that the whole lock rotates around the lock pin 18.

Fig. 1 shows an application of the locking arrangement 10 where an engine related part is the second part 100, e.g. an engine holder for a motor boat engine being locked to a boat related part as a first part 200, e.g. a transom stern. The lock pins 18 being used may either be specially manufactured by the lock manufacturer, but as lock pins preferably the original pins and original nuts are used being obtained from respective engine manufacturer.

As is shown in Fig. 1 the second, engine related part 100 has a notch 101 with a rest surface 102 and an abutting surface 103. Furthermore the second, engine related part 100 has a cover surface 104. Everyone of the rest surface 102, the abutting surface 103 and the cover surface 104 cooperate with the safety shackle 20 on one hand for elimination of its rotation and also to cover an assembling opening 22 in the safety shackle 20.

It is also conceivable to eliminate approach to the lock pin 18 further at the contact surfaces between on one hand the locking housing 11 and the first, boat related part 200 and on the other hand the second, engine related part 100 by providing the lock pin 18 externally with a rotatable cylindrical sleeve 180, which is extended to pass the said contact surfaces and in such a way minimize the risk for having the lock pin 18 sawn off between the contact surfaces. Such a rotation sleeve180 involve that the lock pin 18 would be made of a softer and cheaper material. Fig. 1 shows such a cylindrical sleeve which is extended to pass both the contact surfaces. An alternative to the sleeve shown in Fig. 1 is that the sleeve is prolonged into a space in the lock body 15 adapted to the sleeve.

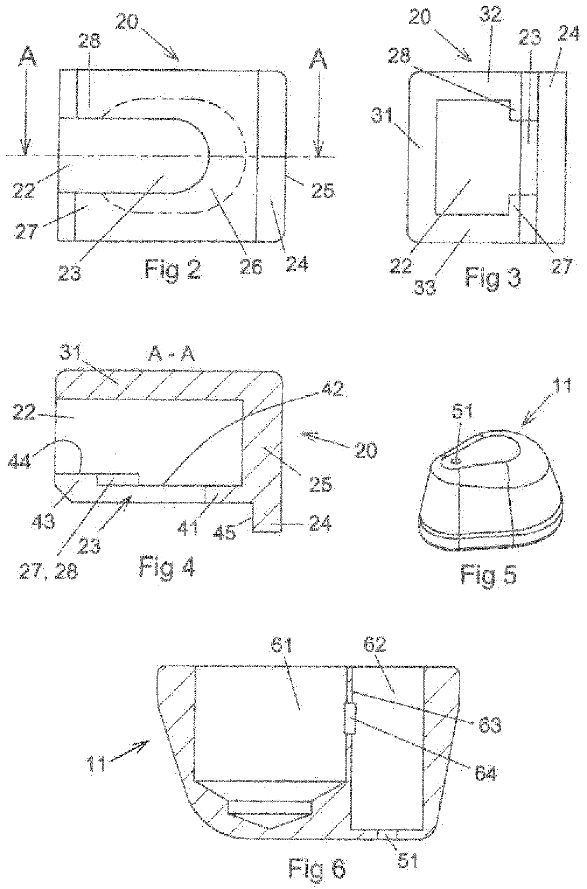

Fig. 2 shows the safety shackle 20 from below with a U-formed slit 23 open in the direction to the assembling opening 22 of the safety shackle. The slit has a width corresponding to the diameter of the lock pin such that the safety shackle can be pushed in over the head of the bolt of the lock pin. Furthermore the underside is provided with a bearing edge 24 protruding from the underside and situated at a closed side of the safety shackle 20, preferably an opposite side 25 being opposite the side with the assembling opening 22. The safety shackle 20 is provided with an internal recess 26, shown with broken lines in the figure and in which the head of the bolt of the lock pin is located when the safety shackle 20 is installed. By this recess 26 there are catch heads 27, 28 preventing the safety shackle from being broken free and slip away from the lock pin and its head of bolt when the safety shackle is installed.

Fig. 3 shows the safety shackle 20 from the assembling opening 22 with the U-formed slit 23 and the bearing edge 24. The safety shackle 20 is provided with a first cover side 31, a second cover side 32 and a third cover side 33. Thus a head of the bolt being introduced through the assembling opening 22 is surrounded by these three cover sides, by the closed side and by the underside. Also the catch heads 27, 28 are shown in the figure.

Fig. 4 shows a section A-A according to Fig. 2 through the safety shackle 20 with its first cover side 31 and the opposite side 25 and its underside 41. The bearing edge 24 extends as a prolongation of the opposite side 25. The U-formed slit 23 is situated in the underside 41. The inside of the underside 41 provide the contact surface 42 for the head of the bolt when it is introduced in the safety shackle 20. From the contact surface 42 of the inside there are shoulders 43 splitting the catch heads 27, 28, said shoulders 43 have shoulder surfaces 44 the level of which is higher than the level of the contact surface 42. Preferably the shoulder surfaces 44 are plane. By this level difference the safety shackle will be restricted from being broken away by sliding from the head of the bolt when it is installed. In the embodiment of the safety shackle shown the bearing edge 24 has a plane side 45 facing the safety shackle, which side abuts a likewise plane side of the second, engine related part when the safety shackle 20 is installed. Alternatively the lock pin may be equipped with a washer from the engine manufacturer which washer fits the depression formed by the shoulder 43 and the catch head 27. The washer and thus the lock pin are sideways locked inside the depression also in such a use of the safety shackle 20.

Preferably the material of the safety shackle is surface hardened steel or stainless steel.

Fig. 5 shows an embodiment of a locking housing 11 involved in the locking arrangement. Externally the locking housing 11 has curved surfaces and with an unsymmetrical design to render it more difficult to grasp and break the locking arrangement. As is made clear in the figure the locking housing 11 quite surrounds the lock cylinder and the lock body, being connected to the lock pin, at all sides with except for the underside which, when the locking arrangement is installed, abuts the first, boat related part. To lock up the locking arrangement e.g. a key will be used which connects with a key hole 51.

Fig. 6 shows the locking housing 11 in a centre section similar to the section of the locking housing shown in Fig. 1. The locking housing is provided with a first cylindrical chamber 61 and a second cylindrical chamber 62. The first cylindrical chamber 61 has a larger diameter than the second cylindrical chamber 62 and has a diameter corresponding to the external diameter of the lock body. Thus the second cylindrical chamber 62 has a smaller diameter than the first cylindrical chamber 61 and the diameter of which corresponds to the outer diameter of the lock cylinder. As is made clear of the figure the two cylinders 61, 62 are orientated in parallel to each other. Between the two cylinders 61, 62 there is a separation wall 63 provided with a bar opening 64 through which the locking bar is to be introduced for locking of the locking arrangement according to that being shown in Fig. 1. Locking and unlocking of the locking arrangement is made by connection of a key to the locking cylinder through the key hole 51 and thereby operate the locking bar.

When using the locking arrangement at a boat application the engine supplier's washer is thread onto the lock pin, then the safety shackle is fit with an adapted groove for the lock pin and the washer such that the head of the bolt is hidden. Then the lock pin is installed from the exterior of the transom stern through the engine support and the transom stern, the lock body is applied onto the bolt and thereafter also the nut obtained from the engine supplier is fit, whereby the bolt joint as a whole is tightened according to engine supplier's directions. The locking housing is mounted onto the lock body whereby the lock cylinder is acted on with help of a key and the lock bar hit the groove in the lock body. The locking housing is now able to rotate in a free way without resulting in any breaks and the lock pin is totally hidden and prevented from admission to the locking arrangement.

## Claims

1. A locking arrangement (10) for securing of a first part (200) to another part (100), where the first part (200) preferably is a part related to a boat and the second part (100) is a part related to the engine, said locking arrangement (10) includes,
a) a lock body (15) equipped with an annular groove (16) surrounding the lock body, the lock body (15) being included in a locking housing (11),
b) a lock cylinder (12) controllable by an operating means (13), e.g. a key, and having a protruding faucet (14) controlled by the operating means (13), said locking faucet for a locking action protrudes into said surrounding groove (16), whereby the lock cylinder (12) is enclosed in said locking housing (11),
c) a lock pin (18) equipped with a head of a bolt (21) at one end of which, and at the other end being equipped with an anchor means (19), whereby the lock pin (18) extends though the first part (200) and the second part (100) as well and further inside the locking housing (11) and through its lock body (15), whereby the lock pin (18) is anchored to the lock body (15) by said anchor means (19), preferably in form of a nut,
**characterized in that** the locking arrangement (10) furthermore includes a safety shackle (20) surrounding the head of the bolt (21) and that the safety shackle (20) is formed with an open U-formed slit (23) made to be able to receive the lock pin (18) and that the U-formed slit (23) has a recess (26) forming a shoulder (43) as a part of a latch head (27) extending above the contact surface (42) of the head of the bolt (21) in the safety shackle (20) and thereby preventing connection of a tool to the head of the bolt (21) when the locking arrangement (10) is fitted.

2. A locking arrangement according to claim 1, **characterized in that** one side of the safety shackle (20) has a protruding bearing edge (24) to bear against a surface of the second part (100), preferably the part related to the engine, to prevent a rotation of the safety shackle (20).

3. A locking arrangement according to anyone of the claims 1 through 2, **characterized in that** safety shackle (20) has sides (25, 31, 32, 33) surrounding the head of the bolt (21) except for the lock pin receiving side when the safety shackle (20) is installed.

4. A locking arrangement according to claim 3, **characterized in that** the lock pin receiving side of the safety shackle (20), when the locking arrangement is installed, cooperates with a surface (104) of the second part (100), preferably the part related to the engine, which surface abuts the safety shackle (20).

5. A locking arrangement according to anyone of the claims 1 through 4, **characterized in that** the lock body (15) is rotation symmetrical.

6. A locking arrangement according to anyone of the claims 1 through 5, **characterized in that** a rotatable cylindrical sleeve (180) is arranged around the lock pin (18) in the area of the interface between the first part (200) and the locking housing (11) and/or in the area of the interface between the first part (200) and the second part (100).

7. A locking arrangement according to anyone of the claims 1 through 6, **characterized in that** said shoulder (43) having a shoulder surface (44) situated above the contact surface (42) of the safety shackle (20) against the head of the bolt (21) when the safety shackle (20) is installed.

8. A locking arrangement according to claim 7, **characterized in that** the safety shackle (20) is made to surround all the sides (25, 31, 32, 33) of the head of the bolt (21) except for the lock pin receiving side.

9. A locking arrangement according to anyone of the claims 7 through 8, **characterized in that** one side of the safety shackle (20) is equipped with a protruding bearing edge (24) having a side (45) facing the safety shackle (20), preferably with an even shape.

## Patentansprüche

1. Verriegelungsanordnung (10) zum Befestigen eines ersten Teils (200) an einem anderen Teil (100), wobei das erste Teil (200) vorzugsweise ein Teil ist, das einem Boot ähnlich ist, und das zweite Teil (100) ein Teil ist, das dem Motor zugehörig ist, wobei die Verriegelungsanordnung (10) umfasst:
a) einen Verriegelungskörper (15), der mit einer ringförmigen Nut (16) versehen ist, die den Verriegelungskörper umgibt, wobei der Verriegelungskörper (15) in einem Verriegelungsgehäuse (11) enthalten ist,
b) ein Zylinderschloss (12), das durch ein Betriebsmittel (13) gesteuert werden kann, z.B. einen Schlüssel, und das eine vorstehende Absperrvorrichtung (14) hat, die durch das Betriebsmittel (13) gesteuert wird, wobei die Absperrvorrichtung für eine Absperraktion in die umlaufende Nut (16) vorragt, wodurch das Zylinderschloss (12) in das Verriegelungsgehäuse (11) eingeschlossen ist,
c) einen Sicherungsstift (18), der mit einem Kopf eines Bolzens (21) an dessen einem Ende versehen ist, und der am anderen Ende mit einem Verankerungsmittel (19) ausgerüstet ist, wodurch der Sicherungsstift (18) sich ebenfalls durch den ersten Teil (200) und den zweiten Teil (100) und ferner innerhalb des Verriegelungsgehäuses (11) und durch seinen Verriegelungskörper (15) erstreckt, wodurch der Sicherungsstift (18) am Verriegelungskörper (15) durch das Verankerungsmittel (19) verankert ist, vorzugsweise in Form einer Nuss,
**dadurch gekennzeichnet, dass** die Verriegelungsanordnung (10) ferner einen Sicherheitsbügel (20) umfasst, der den Kopf des Bolzens (21) umgibt, und dass der Sicherheitsbügel (20) mit einem offenen U-förmigen Schlitz (23) gebildet ist, der dafür ausgelegt ist, den Sicherungsstift (18) aufzunehmen, und dass der U-förmige Schlitz (23) eine Vertiefung (26) hat, die eine Schulter (43) als Teil eines Rastkopfes (27) bildet, der sich oberhalb der Kontaktfläche (42) des Kopfes des Bolzens (21) im Sicherheitsbügel (20) erstreckt und dabei die Verbindung eines Werkzeugs mit dem Kopf des Bolzens (21) verhindert, wenn die Verriegelungsanordnung (10) montiert ist.

2. Verriegelungsanordnung nach Anspruch 1, **dadurch gekennzeichnet, dass** eine Seite des Sicherheitsbügels (20) eine vorragende Auflagekante (24) hat, die an einer Fläche des zweiten Teils (100) anliegen soll, vorzugsweise das Teil, das dem Motor zugehörig ist, um eine Drehung des Sicherheitsbügels (20) zu verhindern.

3. Verriegelungsanordnung nach einem der Ansprüche 1 bis 2, **dadurch gekennzeichnet, dass** der Sicherheitsbügel (20) Seiten (25, 31, 32, 33) hat, die den Kopf des Bolzens (21) umgeben, außer die den Sicherungsstift aufnehmende Seite, wenn der Sicherheitsbügel (20) installiert ist.

4. Verriegelungsanordnung nach Anspruch 3, **dadurch gekennzeichnet, dass** die den Sicherungsstift aufnehmende Seite des Sicherheitsbügels (20), wenn die Verriegelungsanordnung installiert ist, mit einer Fläche (104) des zweiten Teils (100) kooperiert, vorzugsweise des Teils, das dem Motor zugehörig ist, wobei diese Fläche am Sicherheitsbügel (20) anliegt.

5. Verriegelungsanordnung nach einem der Ansprüche 1 bis 4, **dadurch gekennzeichnet, dass** der Verriegelungskörper (15) rotationssymmetrisch ist.

6. Verriegelungsanordnung nach einem der Ansprüche 1 bis 5, **dadurch gekennzeichnet, dass** eine drehbare zylindrische Hülse (180) rund um den Sicherungsstift (18) im Bereich der Schnittstelle zwischen dem ersten Teil (200) und dem Verriegelungsgehäuse (11) und/oder im Bereich der Schnittstelle zwischen dem ersten Teil (200) und dem zweiten Teil (100) angeordnet ist.

7. Verriegelungsanordnung nach einem der Ansprüche 1 bis 6, **dadurch gekennzeichnet, dass** die Schulter (43) eine Schulterfläche (44) hat, die sich oberhalb der Kontaktfläche (42) des Sicherheitsbügels (20) an dem Kopf des Bolzens (21) anliegend befindet, wenn der Sicherheitsbügel (20) installiert ist.

8. Verriegelungsanordnung nach Anspruch 7, **dadurch gekennzeichnet, dass** der Sicherheitsbügel (20) dafür ausgelegt ist, alle Seiten (25, 31, 32, 33) des Kopfes des Bolzens (21) zu umschließen, außer der den Sicherungsstift aufnehmenden Seite.

9. Verriegelungsanordnung nach einem der Ansprüche 7 bis 8, **dadurch gekennzeichnet, dass** eine Seite des Sicherheitsbügels (20) mit einer vorragenden Auflagekante (24) ausgestattet ist, die eine Seite (45) hat, welche dem Sicherheitsbügel (20) gegenüberliegt, vorzugsweise mit einer ebenen Form.

## Revendications

1. Agencement de verrouillage (10) pour fixer une première partie (200) à une autre partie (100), la première partie (200) étant de préférence une partie associée à un bateau et la deuxième partie (100) étant une partie associée au moteur, ledit agencement de verrouillage (10) comportant :
a) un corps de serrure (15) muni d'une rainure annulaire (16) entourant le corps de serrure, le corps de serrure (15) étant inclus dans un boîtier de verrouillage (11),
b) un cylindre de serrure (12) pouvant être commandé par un moyen d'actionnement (13), par exemple une clé, et présentant un embout saillant (14) commandé par les moyens d'actionnement (13), ledit embout de verrouillage, pour réaliser une action de verrouillage, faisant saillie dans ladite rainure avoisinante (16), le cylindre de serrure (12) étant enfermé dans ledit boîtier de verrouillage (11),
c) une goupille de verrouillage (18) munie d'une tête de boulon (21) à une extrémité, et à l'autre extrémité étant munie d'un moyen d'ancrage (19), la goupille de verrouillage (18) s'étendant à travers la première partie (200) et la deuxième partie (100) également, ainsi qu'à l'intérieur du boîtier de verrouillage (11) et à travers son corps de serrure (15), la goupille de verrouillage (18) étant ainsi ancrée au corps de serrure (15) par ledit moyen d'ancrage (19), de préférence sous la forme d'un écrou,
**caractérisé en ce que** l'agencement de verrouillage (10) comporte en outre un étrier de sécurité (20) entourant la tête du boulon (21) et **en ce que** l'étrier de sécurité (20) est formé avec une fente en forme de U ouverte (23) prévue pour recevoir la goupille de verrouillage (18) et **en ce que** la fente en forme de U (23) présente un renfoncement (26) formant un épaulement (43) faisant partie d'une tête de loquet (27) s'étendant au-dessus de la surface de contact (42) de la tête du boulon (21) dans l'étrier de sécurité (20) et empêchant ainsi la connexion d'un outil à la tête du boulon (21) lorsque l'agencement de verrouillage (10) est monté.

2. Agencement de verrouillage selon la revendication 1, **caractérisé en ce qu'**un côté de l'étrier de sécurité (20) présente un bord d'appui saillant (24) destiné à presser contre une surface de la deuxième partie (100), de préférence la partie associée au moteur, pour empêcher une rotation de l'étrier de sécurité (20).

3. Agencement de verrouillage selon l'une quelconque des revendications 1 et 2, **caractérisé en ce que** l'étrier de sécurité (20) présente des côtés (25, 31, 32, 33) entourant la tête du boulon (21) à l'exception du côté de réception de la goupille de verrouillage lorsque l'étrier de sécurité (20) est installé.

4. Agencement de verrouillage selon la revendication 3, **caractérisé en ce que** le côté de réception de la goupille de verrouillage de l'étrier de sécurité (20), lorsque l'agencement de verrouillage est installé, coopère avec une surface (104) de la deuxième partie (100), de préférence la partie associée au moteur, laquelle surface bute contre l'étrier de sécurité (20).

5. Agencement de verrouillage selon l'une quelconque des revendications 1 à 4, **caractérisé en ce que** le corps de serrure (15) présente une symétrie de révolution.

6. Agencement de verrouillage selon l'une quelconque des revendications 1 à 5, **caractérisé en ce qu'**un manchon cylindrique rotatif (180) est disposé autour de la goupille de verrouillage (18) dans la zone de l'interface entre la première partie (200) et le boîtier de verrouillage (11) et/ou dans la zone de l'interface entre la première partie (200) et la deuxième partie (100).

7. Agencement de verrouillage selon l'une quelconque des revendications 1 à 6, **caractérisé en ce que** ledit épaulement (43) présente une surface d'épaulement (44) située au-dessus de la surface de contact (42) de l'étrier de sécurité (20) contre la tête du boulon (21) lorsque l'étrier de sécurité (20) est installé.

8. Agencement de verrouillage selon la revendication 7, **caractérisé en ce que** l'étrier de sécurité (20) est prévu pour entourer tous les côtés (25, 31, 32, 33) de la tête du boulon (21) à l'exception du côté recevant la goupille de verrouillage.

9. Agencement de verrouillage selon l'une quelconque des revendications 7 et 8, **caractérisé en ce qu'**un côté de l'étrier de sécurité (20) est muni d'un bord d'appui saillant (24) ayant un côté (45) faisant face à l'étrier de sécurité (20) de préférence avec une forme régulière.
